Europäisches Patentamt

European Patent Office

Office européen des brevets

(11) Publication number: **0 117 133**
**A1**

## (12) EUROPEAN PATENT APPLICATION

(21) Application number: **84301019.0**

(22) Date of filing: **16.02.84**

(51) Int. Cl.³: **H 02 H 7/085**
**F 04 B 49/10**

(30) Priority: **16.02.83 GB 8304228**

(43) Date of publication of application:
**29.08.84 Bulletin 84/35**

(84) Designated Contracting States:
**BE DE FR GB NL SE**

(71) Applicant: **R. GOODWIN INTERNATIONAL LTD**
**Goodwin House**
**Hanley Stoke-on-Trent ST1 3NR(GB)**

(72) Inventor: **Goodwin, Richard Stanley**
**Goodwin House**
**Hanley Stoke-on-Trent ST1 3NR(GB)**

(74) Representative: **Senior, Alan Murray et al,**
**J.A. KEMP & CO 14 South Square Gray's Inn**
**London WC1R 5EU(GB)**

(54) **Control of electrically driven pumps.**

(57) A pump including a pump unit mechanically connected to an electric motor, at least one solid state switching device located in the pump in the line of supply of electric power to the motor, and a temperature sensitive device adapted to control the or each switching device to be opened and closed when the sensed temperature is respectively above and below a predetermined temperature.

Fig.3.

EP 0 117 133 A1

Croydon Printing Company Ltd.

- 1 -

## DESCRIPTION

## CONTROL OF ELECTRICALLY DRIVEN PUMPS

This invention relates to the control of electrically driven pumps, particularly submersible pumps. The invention is likely to be particularly applicable to submersible pumps of relatively small size.

Submersible electrically driven pumps have a motor and a pumping unit which normally are in the same casing. The motor is supplied with power via electrical conductors from above the level of the fluid being pumped. For a three-phase motor there will be a cable with a conductor for each phase plus an earth conductor; for a single phase motor there will be live, neutral and earth wires. The supply is generally through a relay switch adjacent a busbar or a source of electrical power. There is usually a current overload protector and also an earth leakage detector. This detector can detect imbalance between the load on any of the three phases, typically using a Faraday coil, and can be arranged to trip the relay off in the event of imbalance. Imbalance might occur due to shorting between two phase wires or between one phase and earth or in the motor windings. A possible cause would be water inside the motor. Generally, the causes of leakage and imbalance require further investigation and it is normal to arrange for the detector to trip the relay so as to require manual re-setting in the event of failure. This encourages investigation of the fault, which is important as the currents handled may be quite large; currents of 100 amps or more being by no means unusual. Thus the leakage detector is likely to be arranged together with the relay switch in a control box near the supply and well away from the pump.

One problem which can quite often create difficulty with pumps is overheating of the motor and this is particularly the case with submersible pumps for two reasons. Firstly, the surrounding fluid may itself be or become relatively hot. Secondly, it may be more difficult to dissipate internally generated heat with a submersible pump than with a normal motor driven pump which operates in the ambient atmosphere. For example, it may become only partially submerged so that the fluid which previously acted as a heat sink no longer surrounds it, for instance having been pumped dry. Again, the density of slurry or fluid, or the system head, may rise, causing overloading and overheating of the motor. This problem is more acute with small pumps having small surface areas and small thermal masses. Operation in the overheated condition can of course destroy the insulation on motor windings or damage bearings and can indeed damage the pump unit. However, overheating is normally only a temporary condition, for instance if due to a temporary low liquid level, and is cured by passage of time and a period of inoperation. Thus, automatic re-setting would assist, as the fault does not merit the investigation which as described above may be appropriate in the event of load imbalance. A similar overheating problem can develop on larger motors if the permitted number of starts per hour is exceeded, heat being developed due to the inrush current.

Previous suggestions for providing protection against overheating have involved location of a temperature detector at a sensitive part of the pump, the detector being arranged to pass signals back to the control box, some distance from the pump, to cause the relay to throw to the off position in the event of overheating. The connection between the detector and the control box involves additional conductors. This makes the system more cumbersome and complicated, and has the disadvantages that there is a danger of shorting to the power cable, against which further protection may have to be incorporated at extra expense. The added complexity of connection is also disadvantageous, particularly if the pump is to be used, as is quite likely, well away from established industrial areas where the risk of error is greater.

According to the present invention there is provided a pump including a pump unit mechanically connected to an electric motor, there being in the pump at least one solid state switching device in the line of supply of electric power to the motor, and a temperature sensitive device adapted to control the or each switching device to be opened and closed when the sensed temperature is respectively above and below a predetermined temperature.

The motor can be protected from excess heat whether this arises from repeated starts or in another way.

0117133

- 4 -

With the invention, a solid state switching device is used to control the motor in accordance with temperature, and the device is located in the pump. It has never previously been seriously regarded as a practical possibility to have such a switch at the pump, but it is now realised that this can be done, and that a surprising number of advantages can result. For instance, the prior difficulties of locating a temperature responsive mechanical switch in the pump arose from the operating conditions which may be very severe, involving bad atmospheres, rapid temperature changes and varied effects of gravity as the orientation of the pump alters. There is a tendency for pumps to become very cold, so that a relay switched to the off condition while submerged may freeze up and be unable later to turn on. Moreover, operation of conventional electromagnetic switching equipment could activate earth leakage detectors to close the main supply relay, so that the pump required attention and re-setting even in the event of overheating. Against this, the present invention offers complete reliability and simplicity in all conditions. Moreover, it is possible to arrange matters so that the normal protection devices such as Faraday coils are not affected when switching takes place, either in causing relay opening themselves, or in being disabled from performing their protection function. In addition, of course, the solid state switching devices are not bulky.

- 5 -

In the event of a single phase supply one solid state switching device will suffice. In the case of a three-phase supply two solid state switching devices or a single, two pole, solid state switching device can be provided to control two of the phases. Where there are two switching devices, a single temperature sensitive device can operate both of them. The temperature sensitive device is preferably supplied by current drawn from the power supply to the motor, but should then be protected with a large series resistance. The supply having passed through the resistance and the temperature sensitive device and then through the firing circuit of the or each solid state switching device can be returned to earth, neutral or another live wire, for instance that of another phase in the event of a three-phase supply.

The invention also provides a pumping system including such a pump together with supply cables and a control box to be located above the surface of a fluid to be pumped, the control box including a relay switch and means for detecting imbalance or earth leakage in the supply to the motor, and wherein the current taken from the supply to control the solid state switching device or devices is itself reduced to a level below that detectable by the detector.

The invention permits the solid state switches to be fired using only a limited current taken from a phase or live wire. This current, being small, will not trip earth leakage or phase imbalance devices when supplied as described.

It can be ensured that the operation of the solid state switching devices will not inadvertently trigger the balance detector to throw the relay in the control box out.

It is an important advantage of the invention that the motor can be automatically stopped and can also be automatically restarted. When the temperature falls below a certain value, the temperature sensitive device will again merely cause the solid state switching devices once more to close and the motor will restart. Furthermore, there is no necessity for the arrangement of the invention in any way to disable the normal protection arrangements. For instance, in the case of the three-phase supply, it is sufficient for the solid state switching device or devices to be effective in only two of the phase supply lines; when these are cut by the switches opening simultaneously the current in the third line also reduces to zero. However, if there is leakage this can still be detected by a Faraday coil.

According to a preferred feature of the invention, the pump is arranged to switch itself off in accordance with the level of fluid in which it operates. Thus the pump can be arranged to switch off in response to a low fluid level or raising of the pump so that it is no longer submerged, either of which causes a rise in the temperature of the pump, due to its own internally generated heat not being dissipated in the usual way. This preferred feature may eliminate the need for externally wired liquid level controls and thus represent a saving.

Another preferred feature of the invention involves the pump being arranged to turn on when the temperature of a fluid in which it is submerged drops below a certain level. For instance, the pump could be used to create circulation to prevent freezing of fluid.

These preferred features can be provided singly or together. Little or no circuit modification would be required.

In order that the invention may be more clearly understood the following description is given by way of example only with reference to the accompanying drawings, in which:

Figure 1 is a general schematic view of a pump of the invention in which the switching device can be located;

Figure 2 represents diagrammatically a control box for the pump of Figure 1;

Figure 3 is a circuit diagram of the electrical supply to the motor of a pump according to the invention; and

Figures 4 and 5 represent alternative supply arrangements for pumps of the invention adapted for single phase supply.

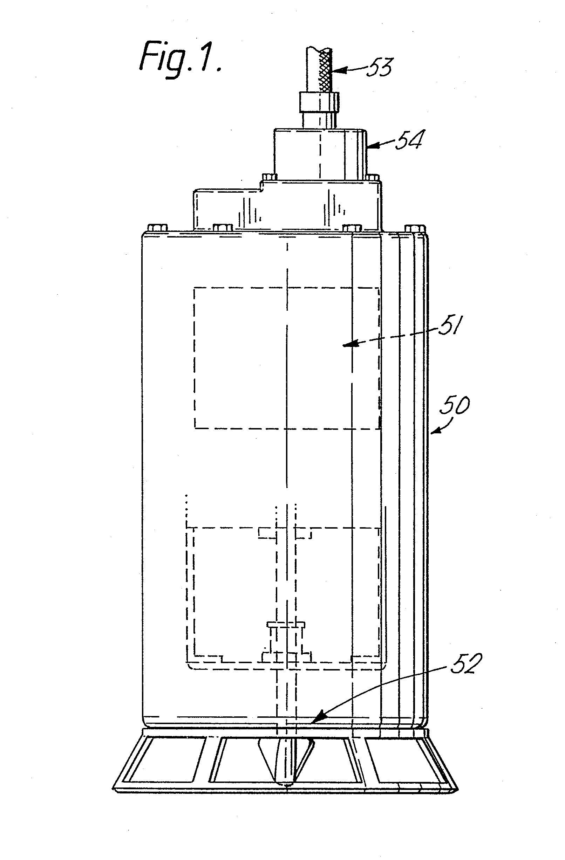

Referring for convenience firstly to Fig. 1, there is shown a pump comprising a housing 50 with a motor 51 in an upper part and having a pump unit 52 in a lower part. Power is supplied to the motor 51 via a cable 53. Indicated at 54 is an uppermost cover enclosing a space wherein the solid state switching device or devices required can be located. These devices can be controlled by a temperature sensitive device which can be located in any appropriate sensitive position such as near bearings or windings as an alternative to location under the cover 54. The temperature sensitive device can be a solid state device, or a mechanical switch such as a bimetallic strip totally enclosed and fully sealed against the surrounding atmosphere.

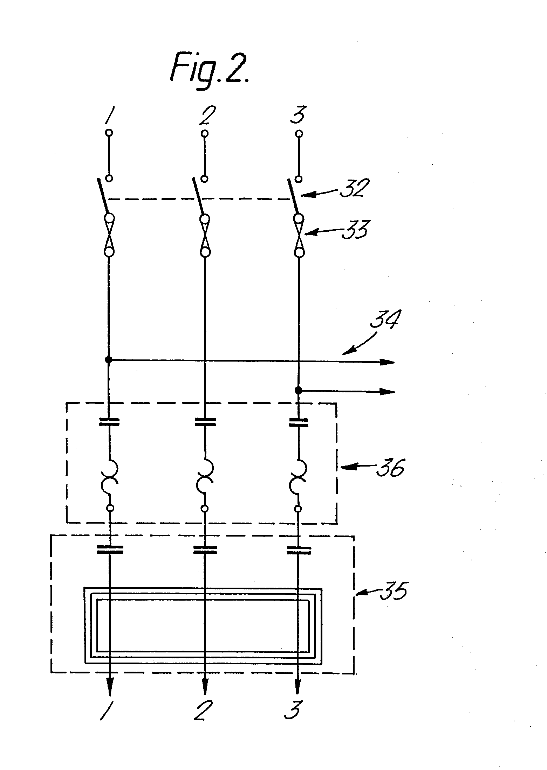

If equipped with a three-phase motor the pump will be associated with a control box at the other end of the supply cable 53; the possible contents of such a control box are schematically and partially indicated in Fig. 2. The three-phase supply lines 1, 2 and 3 include in their path a ganged switch 32, fuses 33, an overload relay with switches indicated generally at 36 and an imbalance and earth leakage detection Faraday coil arrangement with associated contacts as indicated in the box 35. At 34 are connections which lead to a starting and other control circuit, not shown.

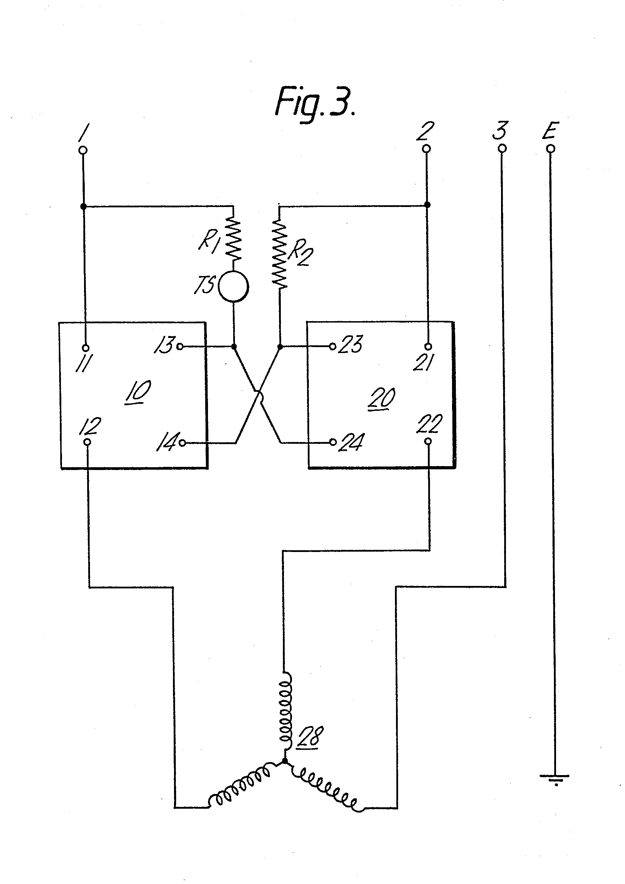

Fig. 3 shows the case of a three-phase motor of which the stator windings are indicated at 28 with two solid state switching devices 10 and 20 in, in this case, lines 1 and 2. Each of the switching devices can provide a path for a large current between respective terminals 11, 12 and 21, 22. This path is closed when a trigger current is supplied between, respectively, the terminals 13, 14 and 23, 24. The supply to these trigger terminals is bled from the two three-phase supply lines concerned, and in both cases is controlled by a temperature sensitive switch TS. Resistors R1 and R2 protect this arrangement from high current and voltage. It will readily be seen that when TS is closed a triggering current can flow from phase line 1 to phase line 2 via resistance R1, switch TS, terminals 13, 14 and resistance R2. Likewise device 20 goes conductive due to a trigger current supplied between terminals 23 and 24.

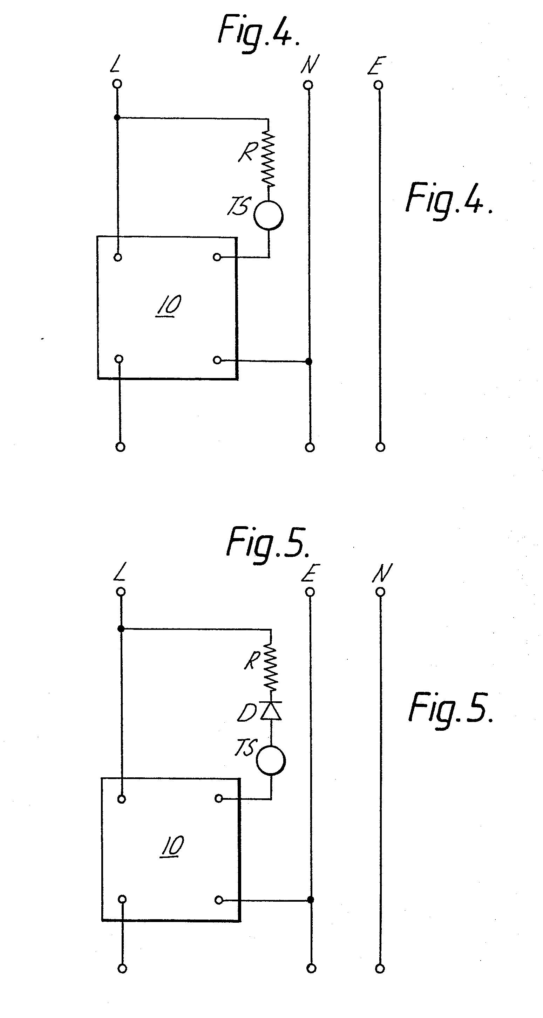

The difference between the above embodiment and that of Fig. 4 which is for a single phase supply, is that only a single solid state switching device 10 is required. This takes a triggering current from the live wire via the resistance R and the temperature sensitive switch TS, returning it to the neutral wire.

Fig. 5 represents a modification in two senses. Firstly, the return of the trigger circuit is to the earth wire. Secondly, a diode D is provided in the circuit to the temperature sensitive device TS. This is required in cases where the solid state switching device trigger circuit accepts only rectified current. Of course, any other form of rectification device can be employed.

The earth leakage or imbalance detector can be of well known type, and selected both as to the imbalance or tripping current and as to the load current. Typically type ELBEL100/4R of the General Electric Simplex range may be employed. The solid state switching device is desirably a normally open solid state relay, e.g. of the type having an optical diode, and a photodetector and trigger circuit for the power switch so as to isolate the control from the controlled current. As an example, a choice from the range of International Rectifiers, depending on supply voltage and maximum load current, can be made.

In summary, in preferred embodiments the invention uses solid state switches capable of switching a current up to 100 amps or more per phase triggered by an electrical supply taken from one or more of the phases, passed through a diode, rectifier or resistor depending upon the type of switch involved, and into a thermal relay or strip or solid state sensing device or switch. It is then passed to the firing circuit of the solid state switching devices or the switches, if there are three-phase motors in use, and back to another phase, neutral or earth. This allows the pump to trip itself out when it overheats and to restart automatically when the temperature falls again. This is all achieved without tripping any phase imbalance or earth leakage detection device which may be provided in the power supply to the pump, and without the provision of any additional conductors between the control

0117133

- 11 -

box and the pump. Thus despite the provision of this additional protection there is no increase in the chances of misconnection of the wiring. Further, virtually simultaneous cutting out of the two phases of a three-phase supply can be assured without any external control circuit. Finally, the invention offers the prospect of complete reliability in an environment not suitable for moving or corrosive parts and does not consume significant power. The re-setting facility ensures that no additional attention is required for the pump when fitted with the temperature protection of the invention. Means may be provided, suitably at the top of the pump, to indicate when power is still on during periods when the pump is stationary due to automatic cut-out. A neon lamp located at the top of the pump, illuminated whenever the power supply is on, and visible through a clear lens would be an appropriate device for the purpose.

-12-

CLAIMS

1. A pump including a pump unit (52) mechanically connected to an electric motor (51) characterised by at least one solid state switching device (10,20) located in the pump in the line of supply of electric power to the motor, and a temperature sensitive device (TS) located in the pump and adapted to control the or each switching device to be opened and closed when the sensed temperature is respectively above and below a predetermined temperature.

2. A pump according to claim 1, characterised in that the or each solid state switching device (TS) is located in an upper part of the pump at an end thereof remote from the pump unit (52).

3. A pump according to claim 1 or 2 characterised by a three-phase motor (28) and two solid state switching devices (10,20).

4. A pump according to claim 3, characterised in that a single temperature sensitive device (TS) controls both solid state switching devices (10,20).

5. A pump according to any preceding claim, characterised in that the solid state switching device or devices (10,20) is or are triggered by supply from the motor power supply via a circuit including a temperature sensor (TS).

-13-

6. A pump according to claim 5 characterised by resistors (R) in the circuit to protect the temperature sensor and trigger circuits of the solid state switching devices.

7. A pump according to claim 5 or 6 characterised by a diode (D) or other rectifier in the circuit.

8. A pumping apparatus characterised by a pump (54) according to any preceding claim together with a switch box including earth leakage or imbalance detectors and wherein the trigger supply for the solid state switching devices is adapted to be below that which would activate the said detector.

0117133

Fig.1.

0117133

## Fig.2.

0117133

# Fig.3.

# Fig.4.

Fig.4.

# Fig.5.

Fig.5.

| | DOCUMENTS CONSIDERED TO BE RELEVANT | | EP 84301019.0 | |
|---|---|---|---|---|
| Category | Citation of document with indication, where appropriate, of relevant passages | Relevant to claim | CLASSIFICATION OF THE APPLICATION (Int. Cl. ³) | |
| X | DE - A1 - 2 238 984 (HOFFMANN) <br> * Pages 2,3; fig. 2 * | 1-7 | H 02 H 7/085 <br> F 04 B 49/10 | |
| Y | | 8 | | |
| Y | US - E - 26 483 (LEGG) <br> * Abstract; column 1, lines 40-48 * | 8 | | |

| TECHNICAL FIELDS SEARCHED (Int. Cl. ³) |
|---|
| H 02 H 7/00 <br> F 04 B 49/00 |

The present search report has been drawn up for all claims

| Place of search | Date of completion of the search | Examiner |
|---|---|---|
| VIENNA | 10-05-1984 | KUTZELNIGG |